(19) Europäisches Patentamt
European Patent Office
Office européen des brevets

(11) Veröffentlichungsnummer: **0 034 716**
**A1**

# (12) EUROPÄISCHE PATENTANMELDUNG

(21) Anmeldenummer: **81100591.7**

(22) Anmeldetag: **28.01.81**

(51) Int. Cl.³: **C 09 B 29/06**
//D06P3/54

(30) Priorität: **08.02.80 DE 3004653**

(43) Veröffentlichungstag der Anmeldung:
**02.09.81 Patentblatt 81/35**

(84) Benannte Vertragsstaaten:
**CH DE FR GB IT LI**

(71) Anmelder: **BASF Aktiengesellschaft**
**Carl-Bosch-Strasse 38**
**D-6700 Ludwigshafen(DE)**

(72) Erfinder: **Grund, Norbert, Dr.**
**Luitpoldstrasse 172**
**D-6700 Ludwigshafen(DE)**

(72) Erfinder: **Hansen, Guenter, Dr.**
**Mundenheimer Strasse 168**
**D-6700 Ludwigshafen(DE)**

(72) Erfinder: **Kermer, Wolf-Dieter, Dr.**
**Im Schlittweg 4**
**D-6701 Fussgoenheim(DE)**

(72) Erfinder: **Kolbinger, Hans-Joergen, Dr.**
**Westring 60**
**D-6718 Gruenstadt(DE)**

## (54) Marineblaue Farbstoffmischungen und ihre Verwendung zum Färben von Polyestern.

(57) Die Erfindung betrifft Farbstoffmischungen, die als Komponenten Farbstoffe der Formel I

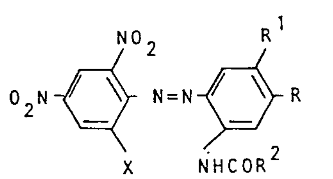

I

und Farbstoffe der Formel II

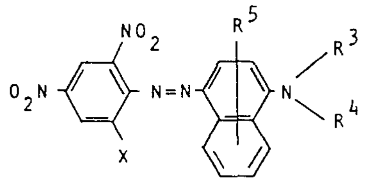

II

enthalten, wobei

X Wasserstoff, Chlor oder Brom,

$R^1$ Wasserstoff, Methoxy, Äthoxy oder Phenoxy

$R^2$ Wasserstoff, Methyl, Äthyl oder n- oder i-Propyl,

$R^3$ Wasserstoff oder einen der unter $R^4$ aufgeführten Reste

$R^4$ Allyl, Methallyl, Crotonyl, Prenyl, Cyclohexyl, gegebenenfalls durch Chlor, Brom, Nitro, Cyan, $C_1$- bis $C_2$-Alkyl oder -Alkoxy substituiertes Phenyl oder Benzyl oder gegebenenfalls durch Chlor, Brom, Cyan, Phenyl, Phenoxy, Hydroxy, $C_1$- bis $C_4$-Acyloxy, $C_1$- bis $C_4$-Alkoxycarbonyl, $C_1$- bis $C_4$-Alkyl- oder Phenylcarbamoyloxy, $C_3$- bis $C_5$-Alkenyloxy oder $C_1$- bis $C_4$-Alkocycarbonyloxy, Phenoxy-carbonyloxy, Tetrahydrofuranyl, $C_1$-$C_4$-Alkyl-tetrahydrofuranyl, Tetrahydropyranyl oder $C_1$-$C_4$-Alkyltetrahydropyranyl substituiertes, gegebenenfalls durch 1 bis 3 O-Atome unterbrochenes, geradkettiges oder verzweigtes $C_1$- bis $C_{11}$-Alkyl,

$R^5$ Wasserstoff, Methyl oder $C_1$- bis $C_4$-Alkoxy und

R einen Rest der Formel $-N\begin{smallmatrix}R^3\\R_4\end{smallmatrix}$ bedeuten, wobei die Farbstoffmischungen 10 bis 95 % an Farbstoffen der Formel I und 5 bis 90 % an Farbstoffen der Formel II enthalten.

Die Mischungen eignen sich vorzüglich zum Färben von Polyestern.

EP 0 034 716 A1

# Marineblaue Farbstoffmischungen und ihre Verwendung zum Färben von Polyestern

Die Erfindung betrifft Farbstoffmischungen, die als Komponenten Farbstoffe der Formel I

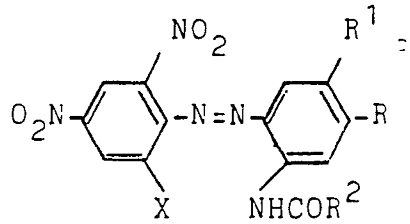

I

und Farbstoffe der Formel II

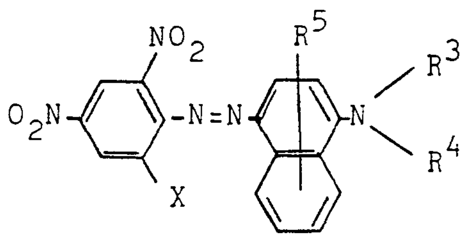

II

enthalten, wobei

X Wasserstoff, Chlor oder Brom,

$R^1$ Wasserstoff, Methoxy, Äthoxy oder Phenoxy

$R^2$ Wasserstoff, Methyl, Äthyl oder n- oder i-Propyl,

$R^3$ Wasserstoff oder einen der unter $R^4$ aufgeführten Reste

$R^4$ Allyl, Methallyl, Crotonyl, Prenyl, Cyclohexyl, gegebenenfalls durch Chlor, Brom, Nitro, Cyan, $C_1$- bis $C_2$-Alkyl oder -Alkoxy substituiertes Phenyl oder Benzyl oder gegebenenfalls durch Chlor, Brom, Cyan, Phenyl, Phenoxy, Hydroxy, $C_1$- bis $C_4$-Acyloxy, $C_1$- bis $C_4$-Alkoxycarbonyl, $C_1$- bis $C_4$-Alkyl- oder Phenyl-carbamoyloxy, $C_3$- bis $C_5$-Alkenyloxy oder $C_1$- bis $C_4$-Alkocycarbonyloxy,

Bg/BL

Phenoxy-carbonyloxy, Tetrahydrofuranyl, $C_1$-$C_4$-Alkyl-tetrahydrofuranyl, Tetrahydropyranyl oder $C_1$-$C_4$-Alkyltetrahydropyranyl substituiertes, gegebenenfalls durch 1 bis 3 O-Atome unterbrochenes, geradkettiges oder verzweigtes $C_1$- bis $C_{11}$-Alkyl,

$R^5$ Wasserstoff, Methyl oder $C_1$- bis $C_4$-Alkoxy und

R einen Rest der Formel 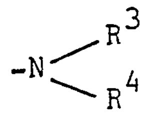 bedeuten, wobei

die Farbstoffmischungen 10 bis 95 % an Farbstoffen der Formel I und 5 bis 90 % an Farbstoffen der Formel II enthalten.

Einzelne Reste $R^4$ sind außer den bereits genannten beispielsweise:
Methyl, Äthyl, Propyl, Butyl, 2-Methyl-propyl, Pentyl, 2- oder 3-Methylbutyl, Hexyl, 2-Äthylbutyl, 2-, 3- oder 4-Methylpentyl, Heptyl, Oktyl, 2-Äthylhexyl, 2-Chloräthyl, 2- oder 3-Chlorpropyl, 2-Bromäthyl, Phenyläthyl, 3-Phenylpropyl, Phenoxyäthyl, 2- oder 3-Phenoxypropyl, Hydroxyäthyl, 2- oder 3-Hydroxypropyl oder -butyl, 2,3-Dihydroxypropyl, 3-Chlor-2-hydroxypropyl, 2-Acetoxyäthyl, 2-Propyroxyäthyl, 2-Butyroxyäthyl, 2-Hydroxy-3-methoxy-, -äthoxy-, -propoxy-, -butoxy- oder -phenoxy-propyl, 2-Acetoxy-3-methoxy-, -äthoxy-, -propoxy-, -butoxy- oder -phenoxy-propyl, $-CH_2CH_2OCH_2CH_3$, $-CH_2CH_2OCH_2CH_2OH$, $-CH_2CH_2OCH_2CH_2OCOCH_3$, $-CH_2CH_2OCH_2CH_2OC_2H_5$, $-CH_2CH_2OCH_2CH_2OCH_2CH_2OH$, $-CH_2CH_2OCH_2CH_2OCH_2CH_2OCOCH_3$, $-CH_2CH_2OCH_2CH_2Cl$, $-CH_2CH_2OCH_2CH(CH_3)-OH$, $-CH_2CH_2OCH_2CH(CH_3)-OCOCH_3$, $-CH_2CH_2OCH_3$, $-CH_2CH_2CH_2OCH_3$, $-CH_2CH_2OCH_2CH_2OCH_3$,

$-CH_2CH_2OCH_2CH_2OCH_2CH_2OCH_3$, $-CH_2CH_2OCH_2CH_2OCH_2CH_2OC_4H_9$, $-CH_2CH_2OCH_2CH_2OC_4H_9$, $-C_2H_4CN$, $-CH_2CH_2CH_2OCH_2CH_2OCH_2CH_2OCH_3$, $-CH_2CH_2CH_2OCH_2CH_2OCH_2CH_2OC_2H_5$, $-CH_2CH_2CH_2OCH_2CH_2OCH_2CH_2OC_3H_7$, $-CH_2CH_2CH_2OCH_2CH_2OCH_2CH_2OC_4H_9$,

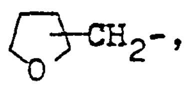, 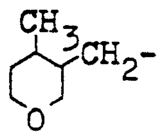 , 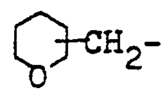 , 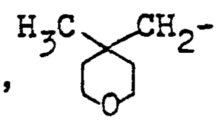 oder

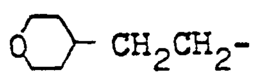 .

Weiterhin sind zu nennen:

$-CH_2CH_2OCH_2CH_2OC_6H_5$, $-CH_2CH_2OC_4H_9$, $-CH_2CH_2OC_6H_5$, $-CH_2-CH(OH)-CH_2OCH_2CH_2-O-C_2H_5$, $-CH_2-CH(OH)-CH_2OCH_2-CH=CH_2$, $-CH_2-CH(OH)-CH_2OCH_2CH_2O-C_6H_5$, $-CH_2-CH(OH)-CH_2OCH_2CH(C_2H_5)-C_4H_9$,

2-, 3- oder 4-Chlor-, -Brom-, -Nitro-, -Cyan-, -Methyl-, -Äthyl-, -Methoxy- oder -Äthoxy-phenyl oder -benzyl, Dichlor-, Dimethyl- oder Dimethoxyphenyl oder -benzyl,

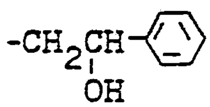 , Methoxy-, Äthoxy-, Propoxy-, Butoxy- oder Phenoxy-carbonyläthyl oder Methoxy-, Äthoxy-, Propoxy-, Butoxy- oder Phenoxy-carbonyloxyäthyl.

Zur Herstellung der Farbstoffmischungen kann man die Einzelkomponenten mechanisch mischen oder eine Mischkupplung durchführen. Einzelheiten der Herstellung können den Beispielen entnommen werden, in denen sich Angaben über Teile und Prozente, sofern nicht anders vermerkt,. auf das Gewicht beziehen.

Die erfindungsgemäßen Farbstoffmischungen eignen sich zum Färben von Synthesefasern, insbesondere linearen Polyestern in dunkelblauen Tönen. Sie zeichnen sich durch hervorragendes färberisches Verhalten, insbesondere Temperaturunabhängigkeit des Aufziehverhaltens, gute Baderschöpfung und gutes Aufbauvermögen bis zu hohen Farbtiefen sowie sehr hohe Farbstärke aus. Die Echtheitseigenschaften der Färbungen entsprechen weitgehend denen der Einzelkomponenten.

Bevorzugte Mischungen enthalten mindestens 50 % eines oder mehrerer Farbstoffe der Formel I.

Von besonderer technischer Bedeutung sind Farbstoffmischungen, die als Komponenten Farbstoffe der Formel I a

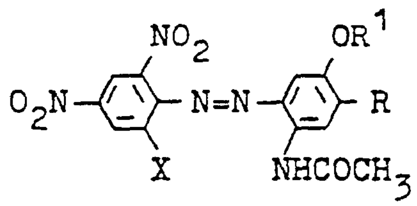

I a

und Farbstoffe der Formel II a

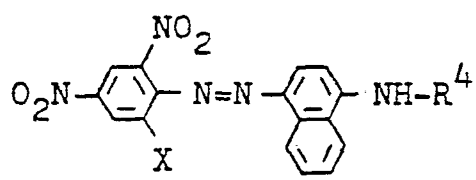

II a

enthalten, wobei X, $R^1$ und $R^4$ die angegebene Bedeutung haben, R ein Rest der Formel

$NHC_2H_4CN$ oder 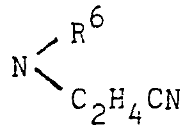

ist, $R^6$ $C_1$- bis $C_5$-Alkyl, Allyl, Methallyl, Crotonyl, Prenyl oder Benzyl bedeutet, und die Mischung 50 bis 95 % an Farbstoffen der Formel I a und 5 bis 50 % an Farbstoffen der Formel II a enthält.

## Beispiel 1

a) 262 Teile 6-Brom-2,4-dinitroanilin werden in 2000 Teile konzentrierte Schwefelsäure eingetragen. Unter Rühren und Kühlung läßt man bei 5 bis 15 °C 320 Teile Nitrosylschwefelsäure (11,5 % $N_2O_3$) langsam zulaufen und rührt mindestens 3 Stunden bei 10 °C bis 15 °C nach.

b) 217 Teile 1-(2',3'-Dihydroxy-propyl-amino)-naphthalin werden in ein Gemisch von 2000 Teilen Wasser, 300 Volumenteilen konzentrierter Salzsäure, 10 Teilen Amidosulfonsäure und 10 Teilen eines Diisobutylnaphthalin-1-sulfonsäure-Gemisches gegeben. Man fügt 4000 Teile Eis hinzu und läßt unter gutem Rühren die unter a) bereitete Diazoniumsalzlösung bei -5 bis +3 °C langsam zulaufen. Durch Zugabe von Natriumacetat oder -formiat bis zu einem pH-Wert von 3 wird die Umsetzung vervollständigt. Der erhaltene Farbstoff wird bei Raumtemperatur oder erhöhter Temperatur abgesaugt, mit Wasser neutral und salzfrei gewaschen und getrocknet. Man erhält etwa 415 Teile des Farbstoffs der Formel

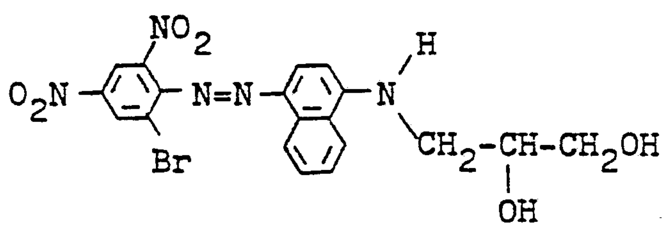

mit dem man auf Polyesterfasern blaue Färbungen von mäßiger Farbtiefe erhält.

c) Aus 273 Teilen 2-(N-Allyl-N-ß-cyanäthyl-amino)-4-acetanisidin erhält man analog Beispiel 1 b) 495 Teile des Farbstoffs der Formel

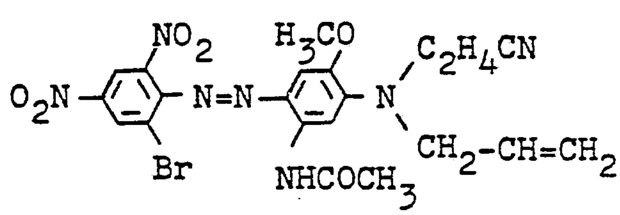

Mit diesem Farbstoff erhält man auf Polyesterfasern blaue Färbungen mit guter Licht-, Thermofixier-, Schweiß- und Waschechtheit. Der Farbstoff zeigt jedoch ein schlechtes Aufbauvermögen und eine starke Abhängigkeit der Farbtiefe von der Temperatur im Färbebad im Bereich von 120 bis 140 °C.

d) Aus 233 Teilen 2-(N-ß-Cyanäthylamino)-4-acetanisidin erhält man analog Beispiel 1 b) 460 Teile eines violettschwarzen Pulvers der Formel

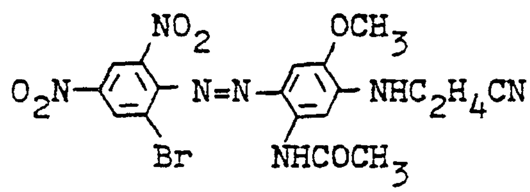 ,

mit dem man auf Polyesterfasern blauviolette Färbungen von geringer Farbtiefe erhält.

e) Polyestergewebe wird nach dem HT-Verfahren mit einer Farbstoffmischung gefärbt, die aus
20 Teilen des unter 1 b) hergestellten Farbstoffs,
70 Teilen des unter 1 c) hergestellten Farbstoffs und
10 Teilen des unter 1 d) hergestellten Farbstoffs
besteht. Dabei wird das Farbstoffgemisch zweckmäßigerweise als Dispergiermittel enthaltende feindisperse Zubereitung eingesetzt.
Man erhält farbstarke, egale Marineblau-Färbungen mit gutem Echtheitsniveau. Im HT-Bereich von 125 bis 135 °C ist die Farbtiefe nur wenig von der Temperatur abhängig. Die Farbstoffmischung zeigt auch bei tiefen Marineblau-Färbungen noch ein gutes Badausziehvermögen und einen guten Farbaufbau.

Beispiel 2

262 Teile 6-Brom-2,4-dinitro-anilin werden wie unter 1 a) diazotiert und analog 1 b) auf eine Mischung von 46,9 Teilen 1-(2',3'-Dihydroxy-propyl-amino)-naphthalin, 185,4 Teilen 2-(N-Allyl-N-ß-cyanäthyl-amino)-4-acet-anisidin und 24,4 Teilen 2-(N-ß-Cyanäthylamino)-4-acet-anisidin gekuppelt.

Man erhält einen Mischfarbstoff, der der in Beispiel 1 e) hergestellten mechanischen Mischung in der chemischen Zusammensetzung entspricht.
Der Mischfarbstoff wird nach bekannten Methoden in eine Farbstoffzubereitung überführt und zum Färben von Polyestern verwendet. Dabei werden die gleichen coloristischen Ergebnisse wie bei Beispiel 1 e) erzielt.

Beispiel 3

Polyestergewebe wird mit einer Mischung aus 70 Teilen des Farbstoffs aus Beispiel 1 c), 5 Teilen des Farbstoffs aus Beispiel 1 d) und 25 Teilen des Farbstoffs der Formel

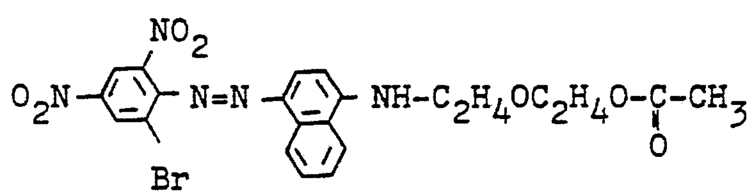

gefärbt. Man erhält farbstarke, egale Marineblau-Färbungen mit guten Echtheiten. Die Mischung zeigt ein gutes Aufbauverhalten bis zu tiefen Marineblau-Tönen.

Farbton und Farbtiefe werden beim HT-Verfahren durch Temperatur- oder pH-Wert-Schwankungen im Färbebad nur wenig beeinflußt.

Beispiel 4

217,5 Teile 6-Chlor-2,4-dinitro-anilin werden analog Beispiel 1 a) diazotiert und analog Beispiel 1 b) auf eine Mischung von 156,6 Teilen 2-(N-Äthyl-N-ß-cyanäthyl-amino)-4-acetanisidin, 35 Teilen 2-(N-ß-cyanäthyl-amino)-4-acetanisidin und 53,8 Teilen 1-(3'-Methoxypropyl-amino)-naphthalin gekuppelt. Man erhält 450 Teile eines dunkel gefärbten Farbstoffpulvers, das Polyesterfasern marineblau färbt. Die Färbungen haben gute Licht-, Schweiß-, Wasch- und Thermofixierechtheiten. Die Farbstoff-Mischung zeigt ein gutes färberisches Verhalten, insbesondere ein gutes Aufbauvermögen sowie ein im Bereich von 125 bis 135 °C wenig temperaturabhängiges Ziehvermögen.

Beispiel 5 bis 13

1 Mol 6-Chlor-2,4-dinitro-anilin wird analog Beispiel 1 a) diazotiert und analog Beispiel 1 b) auf eine Mischung von 0,75 Mol 2-(N-Allyl-N-ß-cyanäthyl-amino)-4-acetanisidin und 0,25 Mol einer Verbindung der Formel III

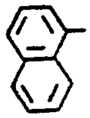 $-NH-R^4$ III

gekuppelt. Die entstehenden Mischfarbstoffe haben ähnliche coloristische Eigenschaften wie die in Beispiel 1 bis 4 hergestellten Produkte:

| Beispiel-Nr. | $R^4$ |
|---|---|
| 5 | $C_2H_4OH$ |
| 6 | $C_3H_6OH$ |
| 7 | $CH_2CH(OH)CH_3$ |
| 8 | $CH_2CH(OH)CH_2OC_2H_4OC_2H_5$ |
| 9 | $CH_2CH(OH)CH_2OC_4H_9$ |
| 10 | Cyclohexyl |
| 11 | $C_6H_5$ |
| 12 | $C_2H_5$ |
| 13 | 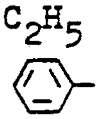 $-OC_2H_5$ |

Die in der folgenden Tabelle aufgeführten Farbstoff-Gemische werden analog Beispiel 1 bis 13 erhalten und zeigen ähnliche coloristische Eigenschaften.

| Bsp. | % | Farbstoff d. Formel | X | $R^1$ bzw. $R^3$ | $R^2$ bzw. $R^5$ | R bzw. $R^4$ | Herstellung analog Beispiel |
|---|---|---|---|---|---|---|---|
| 14 | 25 | II | Cl | H | H | $C_2H_4OH$ | 2 |
| | 60 | I | Cl | $CH_3$ | $CH_3$ | $N<^{CH_2-CH=C(CH_3)_2}_{NHCH_2CH_2CN}$ | |
| | 15 | I | Cl | $CH_3$ | $CH_3$ | $NH-CH_2CH_2CN$ | |
| 15 | 25 | II | Cl | H | H | $C_2H_4OC_2H_4OCOCH_3$ | 1 |
| | 70 | I | Br | $C_2H_5$ | $CH_3$ | $N<^{CH_2-CH=CH_2}_{CH_2CH_2CN}$ | |
| | 5 | I | Br | $C_2H_5$ | $CH_3$ | $NHCH_2CH_2CN$ | |
| 16 | 15 | II | Br | H | H | $C_2H_4OH$ | 1 oder 2 |
| | 85 | I | Br | $CH_3$ | $CH_3$ | $N<^{C_2H_5}_{CH_2CH_2CN}$ | |

| Bsp. | % | Farbstoff d. Formel | X | $R^1$ bzw. $R^3$ | $R^2$ bzw. $R^5$ | R bzw. $R^4$ | Herstellung analog Beispiel |
|---|---|---|---|---|---|---|---|
| 17 | 15 | II | Cl | H | H | $C_3H_6OH$ | 2 |
| | 85 | I | Cl | $CH_3$ | H | $N{<}\genfrac{}{}{0pt}{}{C_2H_5}{CH_2CH_2CN}$ | |
| 18 | 30 | II | Br | H | H | $CH_2-\underset{OH}{CH}-CH_3$ | 2 |
| | 50 | I | Br | $CH_3$ | H | $N{<}\genfrac{}{}{0pt}{}{CH_2C_6H_5}{CH_2CH_2CN}$ | |
| | 20 | I | Br | $CH_3$ | H | $NHCH_2CH_2CN$ | |
| 19 | 30 | II | Br | H | H | $CH_2-\underset{OH}{CH}CH_2OC_2H_4OC_2H_5$ | 1 |
| | 70 | I | Cl | $C_2H_5$ | $CH_3$ | $N{<}\genfrac{}{}{0pt}{}{C_2H_5}{CH_2CH_2CN}$ | |

| Bsp. | % | Farbstoff d. Formel | X | $R^1$ bzw. $R^3$ | $R^2$ bzw. $R^5$ | R bzw. $R^4$ | Herstellung analog Beispiel |
|---|---|---|---|---|---|---|---|
| 20 | 20 | II | Cl | H | H | $CH_2-\underset{OH}{CH}-CH_2OC_4H_9$ | 2 |
| | 80 | I | Cl | $CH_3$ | $CH_3$ | $N{<}\begin{smallmatrix}C_5H_{11}\\CH_2CH_2CN\end{smallmatrix}$ | |
| 21 | 20 | II | Cl | H | H | $CH_2-\underset{OH}{CH}-CH_2OC_6H_5$ | 1 |
| | 55 | I | Br | $CH_3$ | $CH_3$ | $N{<}\begin{smallmatrix}CH_2-CH=CH_2\\CH_2CH_2CN\end{smallmatrix}$ | |
| | 10 | II | Cl | H | H | $CH_2-\underset{OH}{CH}-CH_2OCH_3$ | |
| | 15 | I | Cl | $CH_3$ | $CH_3$ | $N{<}\begin{smallmatrix}CH_2-C_6H_5\\CH_2CH_2CN\end{smallmatrix}$ | |
| 22 | 20 | II | Cl | H | H | $CH_2-\underset{OH}{C}HCH_2OCH_2\overset{C_2H_5}{C}HC_4H_9$ | 1 |
| | 80 | I | Br | $C_2H_5$ | $CH_3$ | $N{<}\begin{smallmatrix}CH_2C_6H_5\\CH_2CH_2CN\end{smallmatrix}$ | |

| Bsp. | % | Farbstoff d. Formel | X | $R^1$ bzw. $R^3$ | $R^2$ bzw. $R^5$ | R bzw. $R^4$ | Herstellung analog Beispiel |
|---|---|---|---|---|---|---|---|
| 23 | 30<br>70 | II<br>I | Cl<br>Br | H<br>$CH_3$ | H<br>$C_2H_5$ | $CH_2CH_2OCH_2CH_2OC_4H_9$<br>$N \begin{smallmatrix} \diagup CH_2-CH=CH_2 \\ \diagdown CH_2CH_2CN \end{smallmatrix}$ | 1 |
| 24 | 20<br>80 | II<br>I | Br<br>Br | $CH_3$<br>$CH_3$ | H<br>$CH_3$ | $CH_3$<br>$N \begin{smallmatrix} \diagup CH_2-CH=CH-CH_3 \\ \diagdown CH_2CH_2CN \end{smallmatrix}$ | 2 |
| 25 | 20<br>80 | II<br>I | Cl<br>Cl | $CH_3$<br>$CH_3$ | H<br>$CH_3$ | $C_6H_5$<br>$N \begin{smallmatrix} \diagup CH_2-CH(CH_3)=CH_2 \\ \diagdown CH_2CH_2CN \end{smallmatrix}$ | 2 |
| 26 | 20<br>70<br>10 | II<br>I<br>I | Br<br>Cl<br>Cl | H<br>$CH_3$<br>$CH_3$ | H<br>$CH_3$<br>$CH_3$ | Cyclohexyl<br>$N \begin{smallmatrix} \diagup C_2H_5 \\ \diagdown CH_2CH_2CN \end{smallmatrix}$<br>$NHCH_2CH_2CN$ | 1 |

| Bsp. | % | Farbstoff d. Formel | X | $R^1$ bzw. $R^3$ | $R^2$ bzw. $R^5$ | R bzw. $R^4$ | Herstellung analog Beispiel |
|---|---|---|---|---|---|---|---|
| 28 | 60 | II | Br | H | H | $C_2H_5$ | 1 |
| | 40 | I | Cl | $CH_3$ | $CH_3$ | $N-CH_2-CH=CH_2$<br>$\diagdown CH_2CH_2CN$ | |
| 29 | 50 | II | Br | H | H | $C_6H_5$ | 2 |
| | 30 | I | Br | $CH_3$ | $CH_3$ | $N-CH_3$<br>$\diagdown CH_2CH_2CN$ | |
| | 20 | I | Br | $CH_3$ | $CH_3$ | $NHCH_2CH_2CN$ | |
| 30 | 10 | II | Br | H | H | 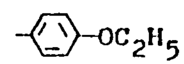 | 2 |
| | 80 | I | Br | $CH_3$ | $CH_3$ | $N-C_4H_9$<br>$\diagdown C_2H_4CN$ | |
| | 10 | I | Br | $CH_3$ | $CH_3$ | $NHCH_2CH_2CN$ | |
| 31 | 20 | II | Br | H | H | $C_2H_4OC_2H_4OC_2H_4OC_4H_9$ | 2 |
| | 70 | I | Br | $CH_3$ | $CH_3$ | $N-CH_2CH=CH_2$<br>$\diagdown CH_2CH_2CN$ | |
| | 10 | I | Br | $CH_3$ | $CH_3$ | $NHCH_2CH_2CN$ | |

Beispiel 32 bis 36

1 Mol diazotiertes 6-Brom-2,4-dinitro-anilin wird analog Beispiel 1 b) auf eine Mischung von 0,7 Mol 2-(N-Allyl-N-ß-cyanäthyl-amino)-4-acetanisidin, 0,1 Mol 2-(N-ß-cyanäthyl-amino)-4-acetanisidin und 0,2 Mol einer Verbindung der Formel III gekuppelt.

Die entstehenden Mischfarbstoffe haben ähnliche coloristische Eigenschaften wie die in Beispiel 1 bis 31 hergestellten Produkte:

| Beispiel-Nr. | $R^4$ |
|---|---|
| 32 | $CH_2CH_2CH_2OCH_2CH_2OCH_2CH_2OCH_3$ |
| 33 | $CH_2CH_2CH_2OCH_2CH_2OCH_2CH_2OC_4H_9$ |
| 34 | 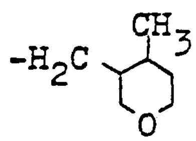 |
| 35 | 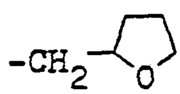 |
| 36 | 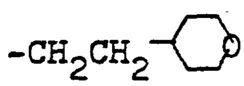 |

## Patentansprüche

1. Marineblaue Farbstoffmischungen, die als Komponenten Farbstoffe der Formel I

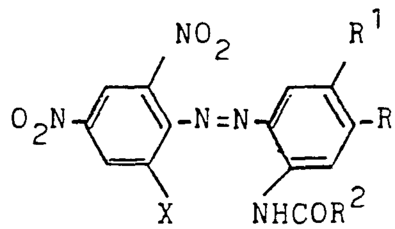

I

und Farbstoffe der Formel II

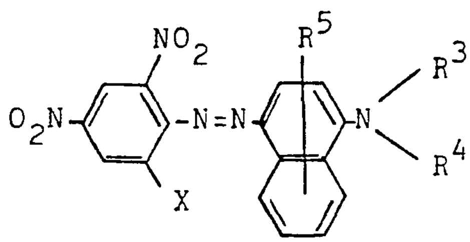

II

enthalten, wobei

X Wasserstoff, Chlor oder Brom,

$R^1$ Wasserstoff, Methoxy, Äthoxy oder Phenoxy

$R^2$ Wasserstoff, Methyl, Äthyl oder n- oder i-Propyl,

$R^3$ Wasserstoff oder einen der unter $R^4$ aufgeführten Reste

$R^4$ Allyl, Methallyl, Crotonyl, Prenyl, Cyclohexyl, gegebenenfalls durch Chlor, Brom, Nitro, Cyan, $C_1$- bis $C_2$-Alkyl oder -Alkoxy substituiertes Phenyl oder Benzyl oder gegebenenfalls durch Chlor, Brom, Cyan, Phenyl, Phenoxy, Hydroxy, $C_1$- bis $C_4$-Acyloxy, $C_1$- bis $C_4$-Alkoxycarbonyl, $C_1$- bis $C_4$-Alkyl- oder Phenyl-carbamoyloxy, $C_3$- bis $C_5$-Alkenyloxy oder $C_1$- bis $C_4$-Alkocycarbonyloxy,

Phenoxy-carbonyloxy, Tetrahydrofuranyl, $C_1$-$C_4$-Alkyl-tetrahydrofuranyl, Tetrahydropyranyl oder $C_1$-$C_4$-Alkyltetrahydropyranyl substituiertes, gegebenenfalls durch 1 bis 3 O-Atome unterbrochenes, geradkettiges oder verzweigtes $C_1$- bis $C_{11}$-Alkyl,

$R^5$ Wasserstoff, Methyl oder $C_1$- bis $C_4$-Alkoxy und

R einen Rest der Formel 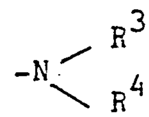 bedeuten,

wobei die Farbstoffmischungen 10 bis 95 % an Farbstoffen der Formel I und 5 bis 90 % an Farbstoffen der Formel II enthalten.

2. Gemische gemäß Anspruch 1, wobei R $NHC_2H_4CN$ oder

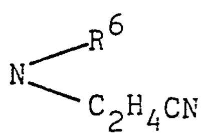

ist,

$R^6$ $C_1$- bis $C_5$-Alkyl, Allyl, Methallyl, Crotonyl, Prenyl oder Benzyl bedeutet.

3. Verwendung der Mischungen gemäß Anspruch 1 zum Färben von synthetischen Polyestern.

Europäisches Patentamt

**EUROPÄISCHER RECHERCHENBERICHT**

**0034716**

Nummer der Anmeldung

EP 81 10 0591

| EINSCHLÄGIGE DOKUMENTE | | | KLASSIFIKATION DER ANMELDUNG (Int Cl :) |
|---|---|---|---|
| Kategorie | Kennzeichnung des Dokuments mit Angabe soweit erforderlich der maßgeblichen Teile | betrifft Anspruch | |
| A | JP - A - 73 17618 (SUMITOMO)<br>* Seiten 1-6 *<br>-- | 1-3 | C 09 B 29/06//<br>D 06 P 3/54 |
| A | CHEMICAL ABSTRACTS, Band 82, Nr. 10, 10. März 1975, Seite 140, Nr. 59893q<br>Columbus, Ohio, U.S.A.<br>& JP - A - 74 61476 (SUMITOMO CHEMICAL CO., LTD.) 14-06-1974<br>* Zusammenfassung *<br>-- | 1-3 | |
| | | | RECHERCHIERTE SACHGEBIETE (Int Cl ·) |
| A | CHEMICAL ABSTRACTS, Band 82, Nr. 10, 10. März 1975, Seite 141, Nr. 59899w<br>Columbus, Ohio, U.S.A.<br>& JP - A - 74 20485 (SUMITOMO CHEMICAL CO., LTD.) 22-02-1974<br>* Zusammenfassung *<br>-- | 1-3 | C 09 B 29/06-29/085 |
| A | GB - A - 1 458 369 (I.C.I.)<br>* Seite 1 *<br>---- | 1-3 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 02-06-1981 | GREEN |